# DEMANDE DE BREVET EUROPEEN

(11) **EP 2 781 968 A1**
(43) Date de publication de la demande: **24.09.2014**
(21) Numéro de dépôt: 13159870.8
(22) Date de dépôt: 19.03.2013
(51) Int. Cl.: G04B 17/22, B23K 26/06, F16F 1/10, H03H 9/02

(54) **Résonateur moins sensible aux variations climatiques**

(71) Demandeur: Nivarox-FAR S.A., 2400 Le Locle (CH)
(72) Inventeur: Cusin, Pierre, 1423 Villars-Burquin (CH); Hessler, Thierry, 2024 St-Aubin (CH); Salihu, Fatmir, 2000 Neuchâtel (CH); Brocher, Lucie, 1950 Sion (CH)
(74) Mandataire: Couillard, Yann Luc Raymond

(57) **Abrégé**

L'invention se rapporte à un spiral compensateur (1) pour un résonateur balancier-spiral compensé thermiquement comportant une âme (9a, 9b, 9c, 9d, 9e, 9f) formée à partir d'au moins un matériau non métallique (11a, 11b, 13b, 15b, 11c, 17c, 19c, 11d, 13d, 15d, 17d, 19d, 11e, 13e, 15e, 17e, 19e, 11f, 21 f). Selon l'invention, l'âme (9a, 9b, 9c, 9d, 9e, 9f) est partiellement revêtue d'au moins une couche (7) qui est stable à l'humidité afin de rendre le spiral compensateur (1) moins sensible aux variations climatiques.

L'invention concerne le domaine des pièces d'horlogerie.

## Description

### Domaine de l'invention

L'invention se rapporte à un résonateur balancier-spiral compensé thermiquement dont le spiral compensateur est moins sensible aux variations climatiques.

### Arrière-plan de l'invention

Lors de tests de condensation sévères sur des mouvements horlogers, il est apparu que la marche pouvait être influencée.

### Résumé de l'invention

Le but de la présente invention est de pallier tout ou partie les inconvénients cités précédemment en proposant un spiral avec une âme non métallique qui est moins sensible aux variations climatiques.

A cet effet, l'invention se rapporte à un spiral compensateur pour un résonateur balancier-spiral compensé thermiquement comportant une âme formée à partir d'au moins un matériau non métallique **caractérisé en ce que** l'âme est partiellement revêtue d'une couche qui est stable à l'humidité afin de rendre le spiral compensateur moins sensible aux variations climatiques.

On comprend donc que le spiral compensateur même en cas de condensation sévère sera moins perturbé dans son fonctionnement afin que le fonctionnement global du résonateur, qu'il forme en coopération avec un balancier, soit moins influencé.

Conformément à d'autres caractéristiques avantageuses de l'invention :
- la couche stable à l'humidité comporte une épaisseur inférieure à 50 nm ;
- la couche stable à l'humidité est électriquement conductrice;
- la couche stable à l'humidité est diamagnétique, antiferromagnétique ou paramagnétique ;
- la couche stable à l'humidité comporte du chrome, du titane, du tantale ou un de leurs alliages ;
- ledit au moins un matériau non métallique comporte du quartz ou du silicium dopé ou non sur lequel est formé au moins partiellement un revêtement de dioxyde de silicium.

De plus, l'invention se rapporte à un résonateur compensé thermiquement pour une pièce d'horlogerie comportant un balancier **caractérisé en ce que** le balancier coopère avec un spiral compensateur selon une quelconque des variantes précédentes.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est un spiral compensateur selon l'invention;
- les figures 2 à 7 sont des variantes de section de spiral compensateur selon l'invention.

### Description détaillée des modes de réalisation préférés

Une étude a été menée afin de déterminer le comportement des mouvements horlogers d'une pièce d'horlogerie en fonction de condensations sévères. L'étude a été menée en forçant le point de rosée à être dépassé brutalement par exemple en maintenant un taux d'hygrométrie supérieur à 80% et en diminuant la température d'au moins 15°C.

Il a été montré que la marche d'une pièce d'horlogerie pouvait être influencée notamment pour le cas où le spiral compensateur d'un résonateur balancier-spiral est formé au moins partiellement à partir d'un oxyde de silicium cristallin ou amorphe. Un tel spiral compensateur peut être formé par exemple à partir de silicium cristallin dopé ou non sur lequel est formé au moins partiellement un revêtement de dioxyde de silicium ou encore à partir de quartz.

L'étude a également montré que l'influence de ces condensations sévères peut être minimisée par une barrière partielle à l'humidité formée sur le spiral compensateur comportant un oxyde de silicium cristallin ou amorphe.

Par conséquent, l'invention se rapporte à un spiral compensateur pour un résonateur balancier-spiral compensé thermiquement comportant une âme formée à partir d'au moins un matériau non métallique. Avantageusement selon l'invention, l'âme est partiellement revêtue d'une couche qui est stable à l'humidité, c'est-à-dire résistante et imperméable à l'humidité, afin de rendre le spiral compensateur moins sensible aux variations climatiques.

Selon l'invention, l'âme partiellement revêtue s'entend comme non-entièrement revêtue, c'est-à-dire qu'une partie seulement de l'âme est revêtue comme une ou plusieurs faces ou même seulement une partie de face. Toutefois, il est préféré qu'un maximum de parties oxydées soit revêtu sans que le spiral soit entièrement revêtu.

Selon l'invention, la couche stable à l'humidité comporte une épaisseur inférieure à 50 nm et préférentiellement comprise autour de 10 nm afin de ne pas influencer mécaniquement le fonctionnement du spiral. Toutefois, l'épaisseur de la couche stable à l'humidité peut atteindre jusqu'au quelques micromètres, mais doit, dans ce cas, être prise en compte pour la compensation thermique du résonateur balancier-spiral.

De plus, il est préféré que la couche stable à l'humidité soit électriquement conductrice et faiblement sensible aux champs magnétiques comme par exemple diamagnétique, antiferromagnétique ou paramagnétique.

A titre d'exemple, la couche stable à l'humidité peut ainsi comporter du chrome, du titane, du tantale, de l'aluminium, du zirconium, de l'alumine, de l'oxyde de chrome, du chrome tungstène, du PTE ou du nitrure de silicium (Si₃N₄). Toutefois, le chrome, le titane, le tantale ou un de leurs alliages sont préférés parce qu'ils ont montré les meilleurs résultats.

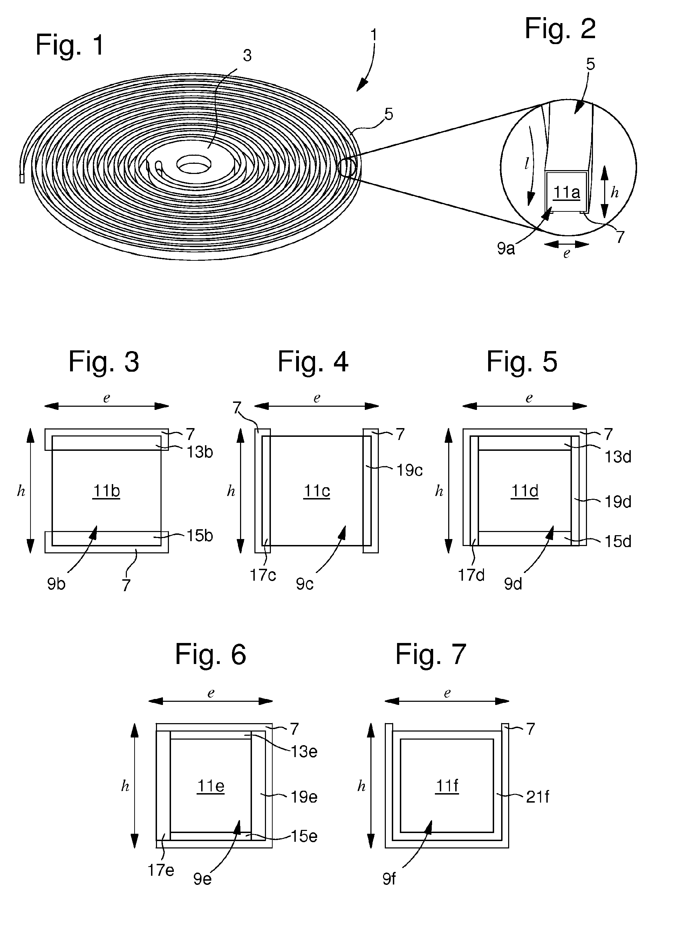

Les figures 1 à 7 présentent des variantes d'un spiral 1 obtenu selon l'invention et destiné à compenser thermiquement le résonateur qu'il forme en coopération avec un balancier. Le spiral compensateur 1 comporte préférentiellement une virole 3 venue de forme avec la lame 5 enroulée selon plusieurs spires. Selon l'invention, au moins la lame 5 du spiral compensateur 1 est revêtue uniquement partiellement d'une couche 7 qui forme une barrière à l'humidité.

La lame 5 comporte une longueur *l*, une épaisseur e et une hauteur h. Elle comporte une âme 9a, 9b, 9c, 9d, 9e, 9f formée à partir d'au moins un matériau 11a, 11b, 13b, 15b, 11c, 17c, 19c, 11d, 13d, 15d, 17d, 19d, 11e, 13e, 15e, 17e, 19e, 11f, 21f.

Selon les variantes des figures 2 à 7, l'âme 9a, 9b, 9c, 9d, 9e, 9f peut être formée à partir d'un unique matériau 11a comme, par exemple, du quartz, ou à partir de plusieurs matériaux 11b, 13b, 15b, 11c, 17c, 19c, 11d, 13d, 15d, 17d, 19d, 11e, 13e, 15e, 17e, 19e, 11f, 21f.

Lorsque l'âme 9b, 9c, 9d, 9e, 9f est formée à partir de plusieurs matériaux, elle peut être entièrement enrobée 11d, 13d, 15d, 17d, 19d, 11e, 13e, 15e, 17e, 19e, 11f, 21f ou partiellement enrobée 11b, 13b, 15b, 11c, 17c, 19c, de plusieurs matériaux avant que la lame 5 du spiral 1 soit partiellement revêtue d'une couche 7 qui est stable à l'humidité, c'est-à-dire résistante et imperméable à l'humidité.

Chaque enrobage 13b, 15b, 17c, 19c, 13d, 15d, 17d, 19d, 13e, 15e, 17e, 19e, pouvant être de même nature ou non et de même épaisseur ou non. A titre d'exemple, l'âme 9b, 9c, 9d, 9e, 9f peut comporter du silicium dopé ou non 11b, 11c, 11d, 11e, 11f, sur lequel est formé au moins partiellement un enrobage de dioxyde de silicium 13b, 15b, 17c, 19c, 13d, 15d, 17d, 19d, 13e, 15e, 17e, 19e, 21f.

Comme visible aux figures 2 à 7, le revêtement partiel 7 peut être présent sur tout ou partie de l'épaisseur e et/ou tout ou partie de la hauteur h et/ou tout ou partie de la longueur 1 sans que le spiral soit entièrement revêtu. Toutefois, il est préféré qu'un maximum de parties oxydées soit revêtu comme cela est le cas pour les figures 3 et 4 dans lesquels les enrobages 13b, 15b, 17c, 19c préférentiellement oxydés sont protégés par des couches 7 qui sont stables à l'humidité.

L'invention se rapporte également à un procédé de fabrication d'un spiral compensateur 1 pour un résonateur balancier-spiral compensé thermiquement comportant les étapes suivantes :
a) former un spiral comportant une âme 9a, 9b, 9c, 9d, 9e, 9f compensée thermiquement et formée à partir d'au moins un matériau 11a, 11b, 13b, 15b, 11c, 17c, 19c, 11d, 13d, 15d, 17d, 19d, 11e, 13e, 15e, 17e, 19e, 11f, 21f ;
b) revêtir partiellement l'âme 9a, 9b, 9c, 9d, 9e, 9f d'au moins une couche 7 qui est stable à l'humidité afin de rendre le spiral 1 moins sensible aux variations climatiques.

Selon l'invention, l'étape a) peut être obtenue par un gravage selon le motif souhaité du spiral dans une plaque souhaitée pour former tout ou partie 11a, 1b, 11c, 11d, 11e, 11f, de l'âme 9a, 9b, 9c, 9d, 9e, 9f. Dans l'exemple du silicium cristallin et du quartz, il peut être envisagé un gravage ionique réactif profond, connu sous l'abréviation anglaise DRIE, pour réaliser l'étape a).

Bien entendu, l'étape a) comporte également au moins une deuxième phase d'enrobage partiel ou total 13b, 15b, 17c, 19c, 13d, 15d, 17d, 19d, 13e, 15e, 17e, 19e, 21 du spiral obtenu par le gravage de la première phase pour finir l'âme 9b, 9c, 9d, 9e, 9f. Cette deuxième phase peut, par exemple, consister en une oxydation thermique destinée à former du dioxyde silicium lorsqu'une plaquette de silicium cristallin dopé ou non a été gravée lors de la première phase de l'étape a).

L'étape b) permet de déposer au moins une couche 7 stable à l'humidité selon une épaisseur inférieure à 50 nm et préférentiellement comprise autour de 10 nm. L'étape b) peut être réalisée par exemple par une quelconque méthode dépôt en couche mince comme un dépôt en phase vapeur afin, de manière préférée, de déposer du chrome, du titane ou du tantale ou un de leurs alliages qui également sont avantageusement des matériaux électriquement conducteurs et faiblement sensibles aux champs magnétiques.

Bien entendu, la présente invention ne se limite pas à l'exemple illustré mais est susceptible de diverses variantes et modifications qui apparaîtront à l'homme de l'art. En particulier, tout matériau susceptibles de former une barrière à l'humidité peut être envisagée et ne peut en aucun cas être limité au chrome, au titane ou au tantale ou un de leurs alliages ou même aux autres matériaux cités dans la présente description.

Il est également possible de choisir le matériau stable à l'humidité en fonction de sa teinte particulière afin d'améliorer son esthétisme dans le cas où la pièce d'horlogerie comporte des parties permettant de voir le spiral comme, par exemple, une pièce d'horlogerie du type « squelette » ou une pièce d'horlogerie avec un fond transparent.

## Revendications

1. Spiral compensateur (1) pour un résonateur balancier-spiral compensé thermiquement comportant une âme (9a, 9b, 9c, 9d, 9e, 9f) formée à partir d'au moins un matériau non métallique (11a, 11b, 13b, 15b, 11c, 17c, 19c, 11d, 13d, 15d, 17d, 19d, 11e, 13e, 15e, 17e, 19e, 11f, 21f) **caractérisé en ce que** l'âme (9a, 9b, 9c, 9d, 9e, 9f) est partiellement revêtue d'au moins une couche (7) qui est stable à l'humidité afin de rendre le spiral compensateur (1) moins sensible aux variations climatiques.

2. Spiral compensateur (1) selon la revendication 1, **caractérisé en ce que** la couche (7) stable à l'humidité comporte une épaisseur inférieure à 50 nm.

3. Spiral compensateur (1) selon la revendication 1 ou 2, **caractérisé en ce que** la couche (7) stable à l'humidité est électriquement conductrice.

4. Spiral compensateur (1) selon l'une des revendications précédentes, **caractérisé en ce que** la couche (7) stable à l'humidité est diamagnétique, antiferromagnétique ou paramagnétique.

5. Spiral compensateur (1) selon l'une des revendications précédentes, **caractérisé en ce que** la couche (7) stable à l'humidité comporte du chrome, du titane, du tantale ou un de leurs alliages.

6. Spiral compensateur (1) selon l'une des revendications précédentes, **caractérisé en ce que** ledit au moins un matériau non métallique (11a, 11b, 13b, 15b, 11c, 17c, 19c, 11d, 13d, 15d, 17d, 19d, 11e, 13e, 15e, 17e, 19e, 11f, 21f) comporte du quartz.

7. Spiral compensateur (1) selon l'une des revendications 1 à 5, **caractérisé en ce que** ledit au moins un matériau non métallique (11a, 11b, 13b, 15b, 11c, 17c, 19c, 11d, 13d, 15d, 17d, 19d, 11e, 13e, 15e, 17e, 19e, 11f, 21f) comporte du silicium sur lequel est formé au moins partiellement un revêtement de dioxyde de silicium.

8. Spiral compensateur (1) selon l'une des revendications 1 à 5, **caractérisé en ce que** ledit au moins un matériau non métallique (11a, 11b, 13b, 15b, 11c, 17c, 19c, 11d, 13d, 15d, 17d, 19d, 11e, 13e, 15e, 17e, 19e, 11f, 21f) comporte du silicium dopé sur lequel est formé au moins partiellement un revêtement de dioxyde de silicium.

9. Résonateur compensé thermiquement pour une pièce d'horlogerie comportant un balancier **caractérisé en ce que** le balancier coopère avec un spiral compensateur (1) selon une quelconque des revendications précédentes.
